# EUROPÄISCHE PATENTSCHRIFT

(11) **EP 1 247 693 B1**
(45) Veröffentlichungstag und Bekanntmachung des Hinweises auf die Patenterteilung: **26.10.2005**
(21) Anmeldenummer: 02004168.7
(22) Anmeldetag: 26.02.2002
(51) Int. Cl.: B60R 5/04

(54) **Laderaumabdeckvorrichtung für ein Kraftfahrzeug**
Load compartment cover for a vehicle
Couvercle pour le compartiment à bagages d'un véhicule

(30) Priorität: 02.04.2001 DE 10117837
(43) Veröffentlichungstag der Anmeldung: 09.10.2002
(73) Patentinhaber: BOS GmbH & Co. KG, 73760 Ostfildern (DE)
(72) Erfinder: Haspel, Klaus, 72108 Rottenburg (DE); Seel, Holger, 71134 Aidlingen (DE)
(74) Vertreter: Patentanwälte Ruff, Wilhelm, Beier, Dauster & Partner

(56) Entgegenhaltungen:
- DE-A- 2 624 947
- DE-A- 3 613 664
- DE-A- 19 754 223
- DE-U- 8 911 676
- DE-U- 29 809 713
- FR-A- 2 353 417

## Beschreibung

Die Erfindung betrifft eine Laderaumabdeckvorrichtung für ein Kraftfahrzeug mit einem flexiblen Flächengebilde, das mit mehreren, sich wenigstens über die Breite des Flächengebildes erstreckenden und parallel sowie in Abstand zueinander angeordneten Querstreben versehen ist, und das in einer komprimierten Stauposition sowie in wenigstens einer zumindest teilweise ausgezogenen Funktionsposition fahrzeugfest sicherbar ist.

Eine solche Laderaumabdeckvorrichtung ist aus der DE 41 10 089 C2 bekannt. Die bekannte Laderaumabdeckvorrichtung weist ein flexibles Flächengebilde auf, das in gleichmäßigen Abständen mit formstabilen Querstreben versehen ist, die in gleichmäßigen Abständen quer zur Ausziehrichtung des Flächengebildes über die gesamte Breite des Flächengebildes erstreckt sind. Dem Flächengebilde ist eine Rollowelle zugeordnet, auf die das Flächengebilde einschließlich der Querstreben aufwickelbar ist. Die Rollowelle ist in einem Kassettengehäuse drehbar gelagert, das fahrzeugfest positionierbar ist. Das Flächengebilde einschließlich der Querstreben ist aus dem Kassettengehäuse heraus horizontal ausziehbar und in einer horizontalen Funktionsposition, in der ein Laderaum des Kombipersonenkraftwagens, in dem die Laderaumabdeckvorrichtung angeordnet ist, verdeckt ist. Für die ausgezogene Funktionsposition des Flächengebildes sind karosseriefeste Halterungen vorgesehen, in denen ein in Ausziehrichtung frontseitiges Endstück des Flächengebildes, das eine Auszugleiste aufweist, einbringbar ist.

Aus der DE 44 24 498 C2 ist eine weitere Laderaumabdeckvorrichtung für einen Lade- oder Kofferraum eines Kraftfahrzeuges bekannt, die ein durch Querstreben gestütztes, flexibles Flächengebilde aufweist. Die Querstreben sind in fahrzeugfesten Führungsschienen verschiebbar, wodurch das Flächengebilde in einer zusammengeschobenen Stauposition oder in einer ausgezogenen Funktionsposition positionierbar ist. Das Flächengebilde einschließlich der Querstreben ist in einer horizontalen Ebene verlagerbar.

Aus der DE 2624947 A ist eine Laderaumabdeckvorrichtung gemäß dem Oberbegriff des Anspruchs 1 bekannt. Diese Laderaumabdeckvorrichtung weist zwei Paare von Befestigungsbereichen auf, für eine ausgezogene und eine zusammengeschobene Position der Abdeckung.

Aufgabe der Erfindung ist es, eine Laderaumabdeckvorrichtung der eingangs genannten Art zu schaffen, die eine verbesserte Variabilität aufweist.

Diese Aufgabe wird dadurch gelöst, dass die Befestigungs- und/oder Führungsbereiche beidseitig des Ausziehbereiches des Flächengebildes angeordnet sind. Dadurch, dass mehrere Befestigungs- und/oder Führungsbereiche in unterschiedlichen Positionen vorgesehen sind, kann das Flächengebilde in unterschiedlichen Funktionspositionen fixiert werden. Da zudem die Querstreben mittels ihrer Halteelemente lösbar mit den entsprechenden fahrzeugfesten Befestigungs- und/oder Führungsbereichen verbunden werden können, kann das Flächengebilde im Laderaum äußerst variabel verlegt und in der jeweiligen Funktionsposition fixiert werden. Gegenüber dem Stand der Technik, bei dem ein Ausziehen entweder in lediglich eine ausgezogene oder zusammengeschobene Funktionsposition möglich ist, oder aber bei dem eine permanente Führung der Querstreben in horizontalen Führungsschienen vorgesehen ist, können bei der erfindungsgemäßen Lösung je nach Bedarf eine oder mehrere Querstreben auch nicht mit entsprechenden Befestigungs- und/oder Führungsbereichen verbunden sein, so dass lediglich eine punkt- oder abschnittsweise Stützung und/oder Umlenkung des Flächengebildes erfolgt. Hierdurch ist eine erheblich größere Variabilität für eine Verlegung des Flächengebildes ermöglicht als beim Stand der Technik. Erfindungswesentlich ist es, dass die Querstreben einzeln oder auch gruppenweise an den jeweils geeigneten Befestigungs- und/oder Führungsbereichen fixiert sind und bei Bedarf auch wieder gelöst werden können, so dass örtliche Fixierungen für die Querstreben ermöglicht sind. Es ist auch nicht notwendig, dass jeweils die in Auszugrichtung vorderste Querstrebe zuerst befestigt wird. Vielmehr können auch weiter hinten liegende Querstreben entsprechend örtlich an verschiedenen Befestigungs- und/oder Führungsbereichen fixiert sein. Der vordere Bereich könnte dann frei nach unten hängen oder mit seinem vorderen Ende unten noch einmal zusätzlich fixiert sein. Befestigungsbereiche sind vorzugsweise punktartige Befestigungsstellen. Führungsbereiche können eine abschnittsweise Linienführung von einer oder mehreren Querstreben ermöglichen. Die entsprechende Linienführung kann geradlinig oder gekrümmt verlaufen.

In Ausgestaltung der Erfindung sind die Befestigungs- und/oder Führungsbereiche in unterschiedlichen räumlichen Ebenen angeordnet. Dadurch ist die Variabilität der Laderaumabdeckvorrichtung weiter verbessert, da das Flächengebilde im Laderaum räumliche Konturen, wie insbesondere gestufte, gekrümmte, abgewinkelte Verläufe einnehmen kann. Dadurch ist je nach Bedarf eine Multifunktionalität für die Laderaumabdeckvorrichtung erzielbar, indem diese eine Segmentierung in unterschiedliche Laderaumbereiche, eine Abdeckung eines ersten Bereiches und gleichzeitig eine Unterlagefläche für einen zweiten Laderaumbereich oder ähnliches bildet. So können mit einer Laderaumabtrennung mehrere Funktionen erzielt werden. Der Laderaum kann mittels der Laderaumabdeckvorrichtung in vordere oder hintere Bereiche unterteilt werden.

Die Laderaumabdeckvorrichtung weist vorzugsweise ein in Längsrichtung des Kraftfahrzeuges auseinanderziehbares und aufbaubares Flächengebilde auf. Je nach Gestaltung der Laderaumwände kann das Flächengebilde jedoch auch quer zur Fahrzeuglängsrichtung auseinandergezogen und aufgebaut werden.

In weiterer Ausgestaltung der Erfindung sind die Befestigungs- und/oder Führungsbereiche als wenigstens in Längsrichtung der Querstreben formschlüssig wirksame Steckaufnahmen und die Halteelemente als derart abgestimmte Steckelemente gestaltet, dass die jeweilige Querstrebe auf Höhe des entsprechenden Befestigungs- und/oder Führungsbereiches sicherbar ist. Die Halteelemente können dabei als permanent über den Rand des flexiblen Flächengebildes hinausragende, funktionsfähige Steckelemente gestaltet sein. Alternativ können die Halteelemente auch bei Nichtgebrauch in den Querstreben und damit innerhalb der Fläche des Flächengebildes verdeckt angeordnet sein und lediglich bei Bedarf in die entsprechende Halte- oder Steckposition überführt werden, in der das jeweilige Halteelement vorzugsweise seitlich über den Rand des Flächengebildes abragt.

In weiterer Ausgestaltung der Erfindung ist das flexible Flächengebilde einschließlich der Querstreben zumindest abschnittsweise auf eine fahrzeugfest positionierbare Rollowelle aufwickelbar. Dadurch kann das Flächengebilde bei Nichtgebrauch in eine äußerst platzsparende Stauposition überführt werden.

In weiterer Ausgestaltung der Erfindung ist die Rollowelle in einem fahrzeugfest positionierbaren Kassettengehäuse gelagert. Das fahrzeugfest positionierbare Kassettengehäuse kann aus dem Fahrzeug entnommen werden.

In weiterer Ausgestaltung der Erfindung ist die Flexibilität des Flächengebildes wenigstens zwischen zwei Querstreben derart hoch, dass das Flächengebilde taschen- oder schlaufenförmig bei einem Zusammenschieben der Querstreben zusammenfaltbar ist. Durch die Taschenbildung beim Zusammenschieben der Querstreben kann das Flächengebilde eine zusätzliche Aufnahme- und Ablagefunktion für entsprechende Gegenstände übernehmen.

In weiterer Ausgestaltung der Erfindung sind die unterschiedlichen Paare von Befestigungs- und/oder Führungsbereichen in Abständen zueinander angeordnet, die zumindest im wesentlichen einem ganzzahligen Vielfachen der Teilung der Querstreben des Flächengebildes entsprechen. Dadurch ist es möglich, das Flächengebilde abschnittsweise in jeweils aufgespanntem Zustand zwischen den einzelnen Befestigungs-und/oder Führungsbereichen zu erstrecken. Durch diese Ausgestaltung können die Querstreben und damit auch das Flächengebilde im jeweils gestreckten Zustand von einem Befestigungs- und/oder Führungsbereich zum nächsten Paar von Befestigungs- und/oder Führungsbereich geführt werden. Dadurch ergeben sich flächige Abdeck- oder Trennabschnitte des Laderaumes bei entsprechender Aufspannung des Flächengebildes.

In weiterer Ausgestaltung der Erfindung sind die Befestigungs- und/oder Führungsbereiche unterhalb einer Fahrzeugbordkante angeordnet. Diese Ausgestaltung ist insbesondere für Laderäume von Kombipersonenkraftwagen und Kofferräume von Personenkraftwagen mit Stufen- oder Fließheck oder auch für Großraumlimousinen geeignet. Die Befestigungs- und/oder Führungsbereiche können so angeordnet sein, dass das entsprechend in der Funktionsposition befindliche Flächengebilde zur Segmentierung, zur Abdeckung, als bodenseitige Unterlage und/oder als Zwischenboden eingesetzt werden kann. Die Querstreben sind in allen Fällen derart stabil gestaltet, dass sie über die Breite des Flächengebildes ausreichende Tragfunktion übernehmen können.

In weiterer Ausgestaltung der Erfindung ist der Rollowelle eine Aufnahmeeinrichtung zugeordnet, die alternativ zu einem Aufwickeln des Flächengebildes ein aneinanderliegendes Aufreihen der Querstreben unter faltenförmiger Ablage der dazwischenliegenden Flächengebildeabschnitte gewährleistet. Dadurch ist es möglich, das Flächengebilde teilweise oder vollständig im Bereich der Aufnahmeeinrichtung zu verstauen, indem es unter Zusammenschieben der Querstreben faltenförmig abgelegt wird.

In weiterer Ausgestaltung der Erfindung sind die Halteelemente durch koaxial zur Längsachse jeder Querstrebe verschiebbare Halteköpfe gebildet, die axial nach innen oder nach außen federbelastet sind. Hierdurch ist ein Überführen der Halteelemente in die Ruheposition oder in die Steckposition in einfacher Weise durch ein koaxiales Verschieben relativ zur Querstrebe ermöglicht.

In weiterer Ausgestaltung der Erfindung ist die Rollowelle in Aufwickelrichtung durch eine Wickelfederanordnung federbelastet, und es ist eine lösbare Sperreinrichtung vorgesehen, die die Wickelfederanordnung außer Kraft setzt. Dadurch wird gewährleistet, dass das flexible Flächengebilde in seinem zumindest teilweise ausgezogenen Funktionszustand, d.h. in relativ zu wenigstens einem Befestigungs- und/oder Führungsbereich fixiertem Zustand, nicht in Rückhol-, d.h. Aufwickelrichtung, zugbelastet ist, so dass auf die Querstreben keine Biegekräfte durch entsprechende Aufwickelkräfte auftreten.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt in perspektivischer Darstellung eine erste Ausführungsform einer erfindungsgemäßen Laderaumabdeckvorrichtung in einem ausgezogenen Funktionszustand,
- Fig. 2: eine weitere Ausführungsform einer erfindungsgemäßen Laderaumabdeckvorrichtung ähnlich Fig. 1,
- Fig. 3: schematisch in einer Seitenansicht einen weiteren Funktionszustand einer Laderaumabdeckvorrichtung ähnlich Fig. 2,
- Fig. 4: die Laderaumabdeckvorrichtung nach Fig. 3 in einem weiteren Funktionszustand,
- Fig. 5: die Laderaumabdeckvorrichtung nach den Fig. 3 und 4 in einem weiteren Funktionszustand,
- Fig. 6: die Laderaumabdeckvorrichtung nach den Fig. 3 bis 5 in einem weiteren Funktionszustand,
- Fig. 7: die Laderaumabdeckvorrichtung nach den Fig. 3 bis 6 in einem weiteren Funktionszustand,
- Fig. 8: die Laderaumabdeckvorrichtung nach den Fig. 3 bis 7 in einem weiteren Funktionszustand,
- Fig. 9: eine Laderaumabdeckvorrichtung ähnlich Fig. 2 in komprimierter Stauposition,
- Fig. 10: eine weitere Laderaumabdeckvorrichtung in einem Funktionszustand, der eine Trennwand hinter einer Fondsitzrückenlehne erzeugt,
- Fig. 11: eine weitere Ausführungsform einer Laderaumabdeckvorrichtung in einem Funktionszustand ähnlich den Fig. 1, 2 und 4,
- Fig. 12: in vergrößerter, schematischer Darstellung eine Ausführungsform einer Laderaumabdeckvorrichtung ähnlich Fig. 1,
- Fig.13: eine Aufnahmeeinrichtung einer weiteren Ausführungsform einer erfindungsgemäßen Laderaumabdeckvorrichtung mit teilweise aufgenommenem Flächengebilde,
- Fig. 14: die Aufnahmeeinrichtung nach Fig. 13 mit vollständig aufgenommenem Flächengebilde,
- Fig. 15: in vergrößerter Schnittdarstellung einen Ausschnitt einer Laderaumabdeckvorrichtung nach einem der vorhergehenden Ausführungsbeispiele, bei dem ein Halteelement einer Querstrebe in einem Befestigungs- und/oder Führungsbereich verankert ist und
- Fig. 16: einen Ausschnitt ähnlich Fig. 15, bei dem das Halteelement im Gegensatz zur Darstellung nach Fig. 15 zur Querstrebe hinauf zugbelastet ist.

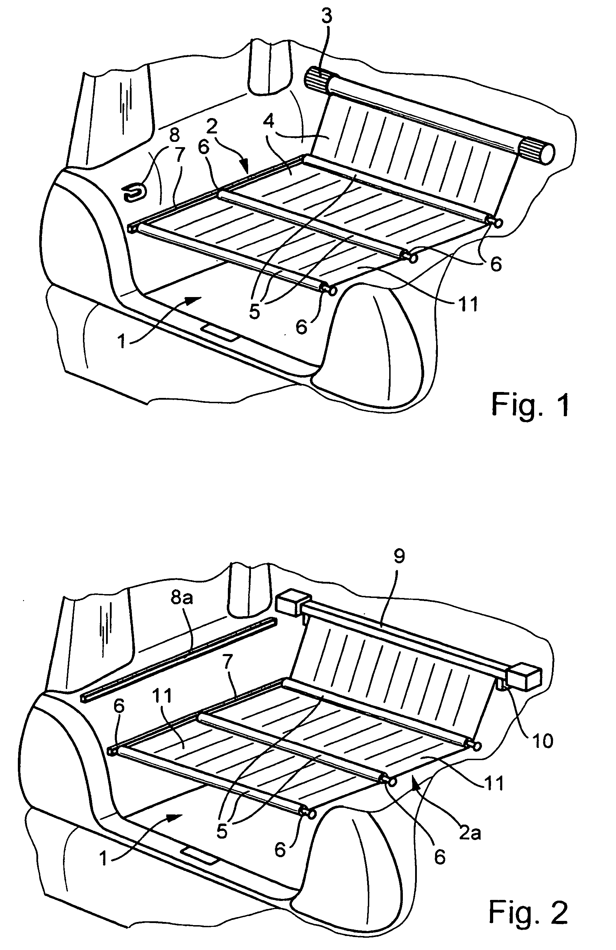

Eine Laderaumabdeckvorrichtung 2 nach Fig. 1 ist in einem Laderaum 1 eines Kombipersonenkraftwagens angeordnet. Die Laderaumabdeckvorrichtung 2 weist ein flexibles Flächengebilde 4, insbesondere in Form einer Plane, auf, die auf einer in einem Kassettengehäuse 3 drehbar gelagerten Rollowelle gehalten ist. Das flexible Flächengebilde 4 ist bahnförmig gestaltet und auf die Rollowelle aufwickelbar. Das flexible Flächengebilde 4 weist mehrere Querstreben 5 auf, die in gleichmäßigen Abständen parallel zueinander und über die Länge des Flächengebildes 4 verteilt in dem Flächengebilde 4 integriert sind. Das Flächengebilde 4 ist aus dem Kassettengehäuse 3 in Fahrzeuglängsrichtung nach hinten und/oder nach unten ausziehbar. Die Querstreben 5 erstrecken sich quer zur Längsrichtung des Flächengebildes 4 über die gesamte Breite des Flächengebildes 4 und sind beim dargestellten Ausführungsbeispiel in das Flächengebilde 4 eingenäht, um die sichere Positionierung innerhalb des Flächengebildes 4 zu gewährleisten. Dadurch ergeben sich zwischen den einzelnen Querstreben 5 mehrere, jeweils gleichgroße Flächengebildeabschnitte 11. Die Querstreben 5 sind derart formsteif gestaltet, dass sie eine Tragfunktion für das Flächengebilde 4 und für auf das Flächengebilde 4 in ausgezogenem Zustand abgelegte Gegenstände bilden. Die Steifigkeit und Stabilität der Querstreben 5 kann abhängig vom jeweiligen Einsatzzweck angepasst werden.

Das Kassettengehäuse 3 ist knapp unterhalb einer Fahrzeugbordkante in fahrzeugfesten Halterungen lösbar befestigt. Um das Flächengebilde 4 in unterschiedlichen ausgezogenen Funktionspositionen zu sichern und zu führen, sind Befestigungs- und Führungsbereiche 7, 8 vorgesehen. Dabei ist ein Führungsbereich 7 durch ein Paar von seitlichen Führungsschienen 7 gebildet, die auf gegenüberliegenden Seitenwänden des Laderaumes 1 fahrzeugfest positioniert sind. Die gegenüberliegenden Führungsschienen 7 sind parallel zueinander horizontal und in Fahrzeuglängsrichtung ausgerichtet und befinden sich etwa auf halber Höhe des Laderaumes 1. In Abstand oberhalb der Führungsschienen 7 sind etwa auf Höhe des Kassettengehäuses 3 im rückseitigen Endbereich des Laderaumes 1 Befestigungspunkte 8 vorgesehen, die einander ebenfalls paarweise gegenüberliegen.

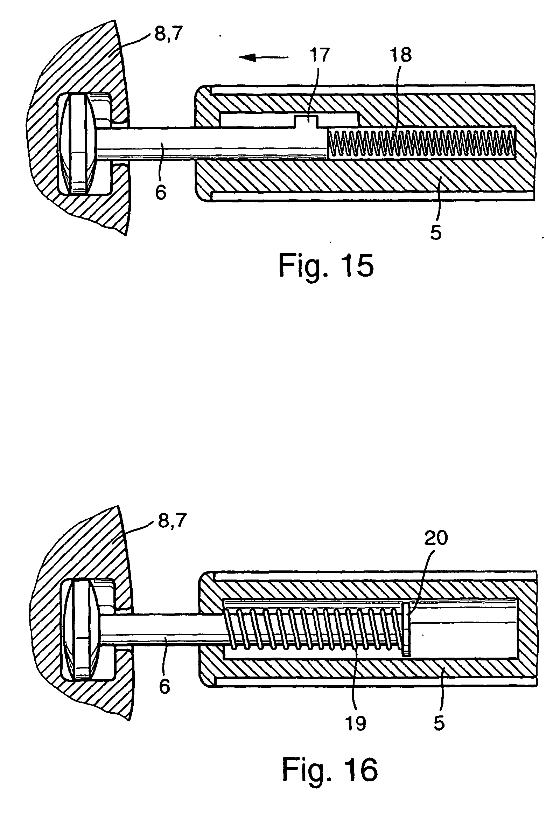

Um das Flächengebilde 4 bzw. die Querstreben 5 in den Führungsschienen 7 führen zu können, weisen die Querstreben 5 im Bereich ihrer gegenüberliegenden seitlichen Enden Halteelemente 6 auf, die als Steckelemente in Form von Halteköpfen gestaltet sind. Die Führungsschienen 7 und die Halteelemente 6 sind gemäß der Schnittdarstellung nach den Fig. 15 oder 16 ausgeführt. Die Führungsschienen 7 sind an mehreren Abschnitten zum Flächengebilde 4 hin so weit offen, dass ein relativ zur Längsachse jeder Querstrebe 5 axiales Herausnehmen oder Eintauchen der Halteköpfe 6 relativ zu dem offenen Hohlprofil der Führungsschienen 7 erfolgen kann. Diese offenen Bereiche sind über die Länge der Führungsschienen 7 verteilt angeordnet, so dass die Querstreben 5 bzw. deren Halteelemente 6 an unterschiedlichen Positionen der Führungsschiene quer zur Längsrichtung der Führungsschienen 7 herausgenommen oder eingesteckt werden können. Um an der jeweils gewünschten Position eine Fixierung der Querstreben und damit auch des Flächengebildes 4 auf Höhe jeder Querstrebe 5 zu erzielen, sind die Halteelemente 6 gemäß den Fig. 15 und 16 axial nach innen oder axial nach außen federbelastet. Die Halteelemente 6 sind koaxial innerhalb einer entsprechenden Hülse jeder Querstrebe 5 verschiebbar. Als Anschlag und als Verdrehsicherung ist beim Ausführungsbeispiel nach Fig. 15 jedem Halteelement 6 ein Führungsnocken 17 zugeordnet, der in einer Nut der Hülse der Querstrebe 5 verläuft. Der übrige, zylindrische Teil des Halteelementes 6 ist in einer an die Führungsnut radial anschließenden zylindrischen Bohrung verschiebbar. Beim Ausführungsbeispiel nach Fig. 15 ist das Halteelement 6 seitlich nach außen durch eine entsprechende Druckfeder 18 auf Druck belastet, so dass der Kopf des Halteelementes 6 innerhalb des Hohlprofiles der Führungsschiene 7 gegen die rückseitige vertikale Wandung gedrückt wird. Hierdurch ist eine kraftschlüssige Fixierung, d.h. Klemmung, erzielbar. Beim Ausführungsbeispiel nach Fig. 16 ist eine Druckfeder 19 vorgesehen, die entsprechend umgekehrt wirksam ist, d.h. sie übt auf das Halteelement 6 eine Rückholkraft zur Mitte der Querstrebe 5 hin aus. Am inneren Stirnende des Halteelementes 6 ist ein Führungskolben 20 vorgesehen, der in dem hohlzylindrischen Raum der Querstrebe 5 verschiebbar ist. Durch die Rückholbelastung des Halteelementes 6 nach innen liegt der Kopf des Halteelementes 6 auf der zum Flächengebilde hin gewandten Wandungsseite der Führungsschiene 7 an, wie anhand der Fig. 16 erkennbar ist. Hierdurch wird in gleicher Weise eine kraftschlüssige Fixierung jeder Querstrebe 5 in Längsrichtung der Führungsschiene 7 erzielt.

Eine der Querstreben 5 des Flächengebildes 4 kann anstelle der Positionierung in dem Führungsschienenpaar 7 auch in dem Befestigungspunkt 8 fixiert werden. Die Befestigungspunkte 8 sind als Stecktaschen gestaltet, die im Querschnitt entsprechend der Schnittdarstellung nach den Fig. 15 und 16 gestaltet sind. Die Befestigungspunkte 8 sind zu einer Längs- oder Hochseite hin offen, um ein entsprechendes Eintauchen oder Herausnehmen der Halteköpfe der Querstreben 5 parallel zur Fahrzeuglängsrichtung zu ermöglichen. Bei der Darstellung nach der Fig. 1 könnte somit beispielsweise die - in normaler Fahrtrichtung gesehen - rückseitige Querstrebe 5 aus dem Führungsschienenpaar 7 herausgenommen und stattdessen in den oberen Befestigungspunkten 8 eingehängt werden. Um hier eine einfache Aus- und Einhängung zu ermöglichen, sollte auf der Rollowelle noch genügend Flächengebilde 4 vorhanden sein, das einen weiteren Auszug des Flächengebildes möglicht. Nach dem Einhängen in die Befestigungspunkte 8 ergibt sich eine wannenartige Ausrichtung des Flächengebildes 4 und damit der Laderaumabdeckvorrichtung 2.

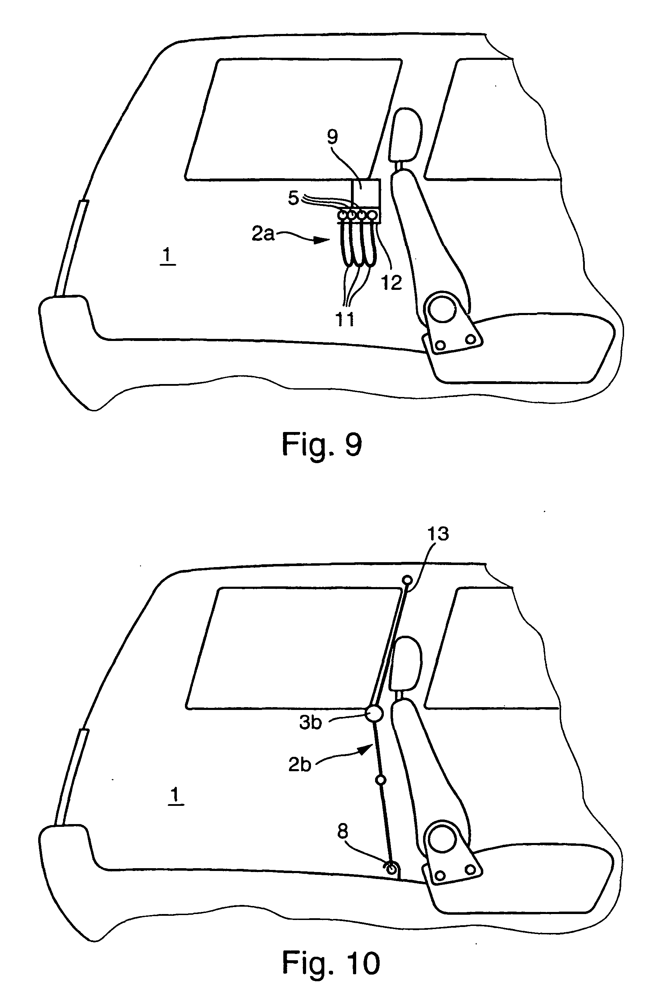

Beim Ausführungsbeispiel nach Fig. 2 ist eine ähnliche Laderaumabdeckvorrichtung 2a vorgesehen, die ebenfalls ein durch Querstreben 5 versteiftes Flächengebilde aufweist. Jede Querstrebe 5 ist auch mit seitlich abragenden Halteelementen 6 versehen, die zeitweise und lösbare Fixierungen in entsprechenden Befestigungs- und/oder Führungsbereichen des Laderaumes ermöglichen. Beim Ausführungsbeispiel nach Fig. 2 ist das Flächengebilde nicht auf einer Rollowelle gehalten, sondern vielmehr lediglich im Bereich einer entsprechenden Aufnahmeeinrichtung 10, die unterhalb eines Kassettengehäuses 9 angeordnet ist, lösbar gehalten. Das Flächengebilde einschließlich seiner Querstreben 5 kann somit als Ganzes aus dem Fahrzeug entnommen werden. Die Aufnahmeeinrichtung 10 ermöglicht aber ähnlich der Darstellung nach Fig. 9 bei Bedarf ein komprimiertes Verstauen des Flächengebildes einschließlich Querstreben 5. Das Kassettengehäuse 9 weist in grundsätzlich bekannter Weise ein nach oben ausziehbares Trennrollo auf, wobei entsprechende Seitenwangen der Aufnahmeeinrichtung 10, die die Halteelemente 6 der Querstreben 5 aufnehmen und fixieren, an der Unterseite des Kassettengehäuses 9 fahrzeugfest angeordnet sind.

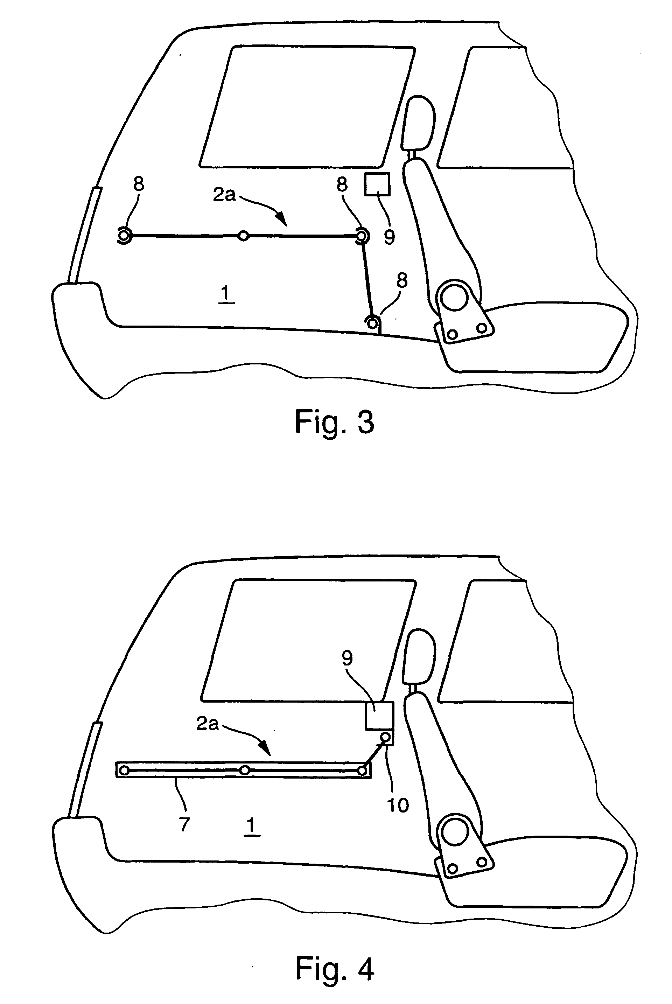

Als Führungsbereiche weist der Laderaum 1 an beiden Seitenwänden jeweils zwei fahrzeugfest angeordnete Führungsschienen 7,8a auf, die parallel zueinander horizontal in Fahrzeuglängsrichtung ausgerichtet sind. Die beiden Führungsschienen 7, 8a sind in unterschiedlichen horizontalen Ebenen übereinander angeordnet. Dadurch kann das Flächengebilde einschließlich der Querstreben 5 in den beiden Führungsebenen alternativ oder gemeinsam gehalten sein. Bei einer gemeinsamen Anordnung der Querstreben 5 alternierend entweder in der oberen oder in der unteren Führungsschiene 7, 8a ergibt sich eine faltenbalgartige Anordnung des Flächengebildes in ausgezogenem Funktionszustand. Beide Führungsschienen 7, 8a auf jeder Seite des Laderaumes 1 sind derart gestaltet, dass die Halteelemente 6 der Querstreben an verschiedenen Stellen der Länge jeder Führungsschiene 7, 8a quer zur Längsrichtung der Führungsschienen 7, 8a herausgenommen werden können oder in diese eingesetzt werden können. Dadurch ist eine äußerst variable Verlegung und Fixierung des Flächengebildes in unterschiedlichen Funktionspositionen möglich, die auf den jeweiligen Einsatzzweck der Laderaumabdeckvorrichtung abgestimmt sind. Anhand der Fig. 3 bis 11 sind verschiedene Anordnungen und Ausrichtungen von verschiedenen Laderaumabdeckvorrichtungen 2a, 2b vorgesehen, die jeweils ein durch Querstreben versteiftes flexibles Flächengebilde entsprechend oder ähnlich den Fig. 1 oder 2 aufweisen. Die Zeichnungen sind diesbezüglich im wesentlichen selbsterläuternd, so dass hiermit auf den Offenbarungsgehalt der Zeichnungen verwiesen wird. Ergänzend wird noch kurz auf die verschiedenen Ausrichtungen und Ausgestaltungen eingegangen.

Bei der Ausgestaltung nach Fig. 3 sind Befestigungs- und/oder Führungsbereiche 8 dargestellt, die etwa auf halber Höhe des Laderaumes 1 und im Bodenbereich des Ladraumes 1 vorgesehen sind. Unmittelbar hinter einer Rückenlehne der Fondsitzbank ist ein Kassettengehäuse 9 vorgesehen, das entsprechend Fig. 2 gestaltet ist.

Die Darstellung nach Fig. 4 entspricht der Ausführungsform nach Fig. 2, wobei bei dieser Ausführung gemäß Fig. 4 ein oberer Führungsschienenbereich nicht dargestellt ist. Auch hier können jedoch je nach Bedarf sowohl unterhalb der Horizontalebene des Führungsschienenpaares 7 als auch oberhalb dieser Horizontalebene noch weitere Befestigungs- und/oder Führungsbereiche fahrzeugfest angeordnet sein. Die Querstreben sind an unterschiedlichen Stellen, insbesondere unmittelbar benachbart zu den in Fig. 4 dargestellten Positionen, quer zur Längsrichtung der Führungsschienen 7 aus diesen herausnehmbar. Dazu muss die jeweilige Querstrebe lediglich geringfügig von Hand bis auf Höhe des offenen Bereiches verschoben werden und anschließend der Haltekopf zur Mitte des Flächengebildes hin in Fahrzeugquerrichtung nach innen gedrückt werden, falls er nicht ohnehin durch die Druckkraft einer nach innen wirkenden Feder gemäß Fig. 16 zwangsläufig eingezogen wird.

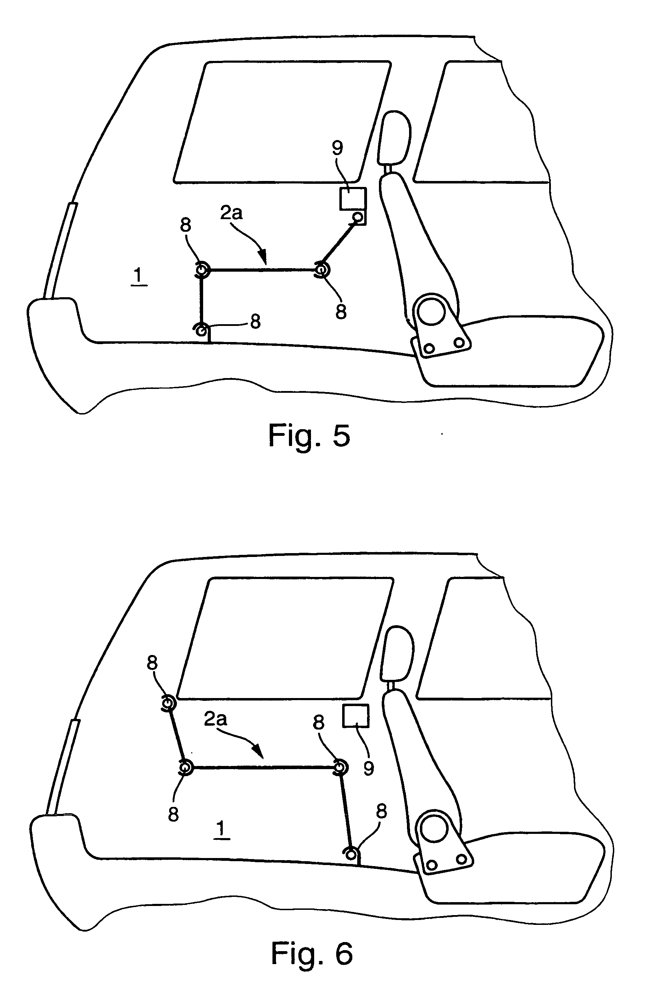

Bei der Ausführung nach Fig. 5 bildet die Laderaumabdeckvorrichtung 2a für den vorderen Bereich des Laderaumes eine Abdeckung und stellt gleichzeitig mit dem vertikal nach unten abragenden Flächengebildeabschnitt eine Segmentierung und Abtrennung des vorderen Laderaumbereiches von dem rückseitigen Laderaumbereich dar. Zur Realisierung dieser Ausrichtung der Laderaumabdeckvorrichtung 2a sind an den entsprechenden Stellen im Seitenwandbereich des Laderaumes die Befestigungspunkte 8 fahrzeugfest positioniert, die gemäß der Ausführung nach den Fig. 1 und 15, 16 gestaltet sein können.

Bei der Ausführung nach Fig. 6 ist das Flächengebilde stufenförmig zwischen der Fahrzeugbordkante und dem Laderaumboden mittels Umlenkungen im Bereich der mittleren Befestigungspunkte 8 verlegt. Hierdurch kann der untere Teil des Laderaumes vom Fahrzeugheck her und der obere Teil vom Fondsitzbereich aus zugänglich sein.

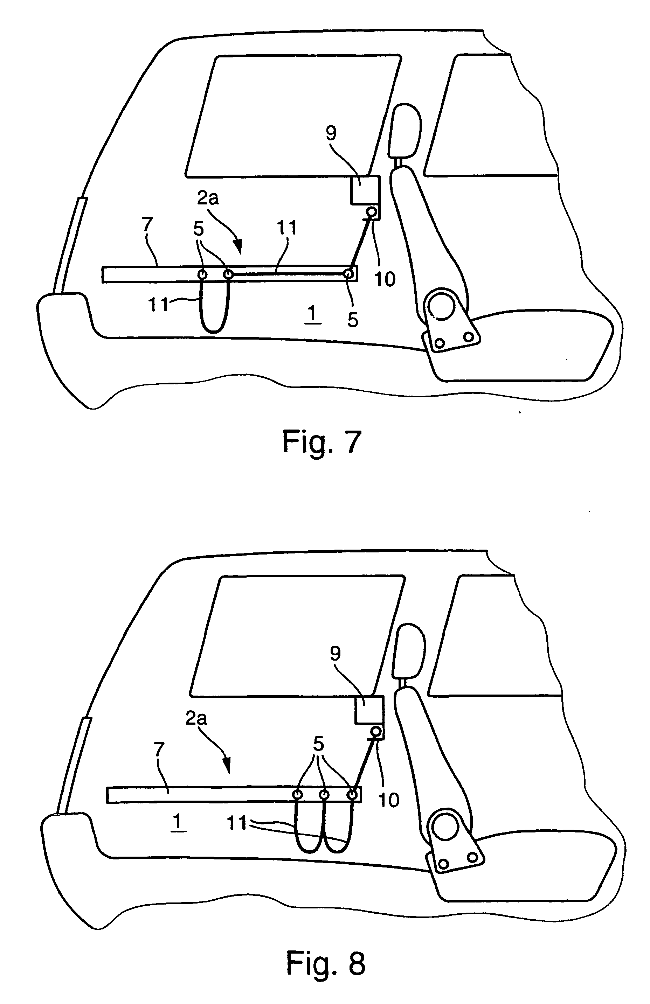

Beim Ausführungsbeispiel nach Fig. 7 sind zwei benachbarte Querstreben 5 derart zusammengeschoben, dass sich zwischen diesen der entsprechende Flächengebildeabschnitt 11 durch sein Eigengewicht falten- oder schlaufenförmig nach unten aushängt, dadurch wird eine Aufnahmetasche für entsprechende Gegenstände gebildet.

Bei der Ausführung nach Fig. 8 sind zwei hintereinanderliegende Aufnahmetaschen durch entsprechendes Zusammenschieben der Querstreben 5 und Nachuntenhängen der Flächengebildeabschnitte 11 gebildet.

Bei der Ausführung nach Fig. 9 ist unterhalb des Kassettengehäuses 9 eine Aufnahmeeinrichtung 12 vorgesehen, die mit seitlichen Aufnahmewangen versehen ist, in die alle Halteelemente der Querstreben 5 aneinandergereiht einsteckbar sind, so dass sich die in Fig. 9 dargestellte, komprimierte Stauposition für die Laderaumabdeckvorrichtung 2a ergibt. Die entsprechenden Flächengebildeabschnitte 11 sind faltenartig aneinandergedrängt.

Bei der Ausführung nach Fig. 10 ist ein Kassettengehäuse 3b vorgesehen, das etwa auf Höhe der Fahrzeugbordkante fahrzeugfest, horizontal und in Fahrzeugquerrichtung ausgerichtet positioniert ist. In diesem Kassettengehäuse 3b ist ein Trenngitter 13 gelagert, das in eine Schutzposition nach oben ausziehbar und im Bereich von Dachholmen des Fahrzeugs einhängbar ist. Zusätzlich schließt unterhalb des Kassettengehäuses 3b eine Laderaumabdeckvorrichtung 2b an, die in der Positionierung gemäß Fig. 10 zur Abtrennung des Laderaumes vom Fondsitzbereich dient. Hierzu ist im Bodenbereich des Laderaumes ein entsprechendes Befestigungspunktpaar 8 vorgesehen. Diese Funktionsposition ist insbesondere vorteilhaft, falls die Fondsitze nach vorne umgeklappt werden. Dennoch ist der rückseitige Laderaum durch das Trennrollo 13 einerseits und die Laderaumabdeckvorrichtung 2b andererseits vollständig vom Fondsitzbereich abgetrennt.

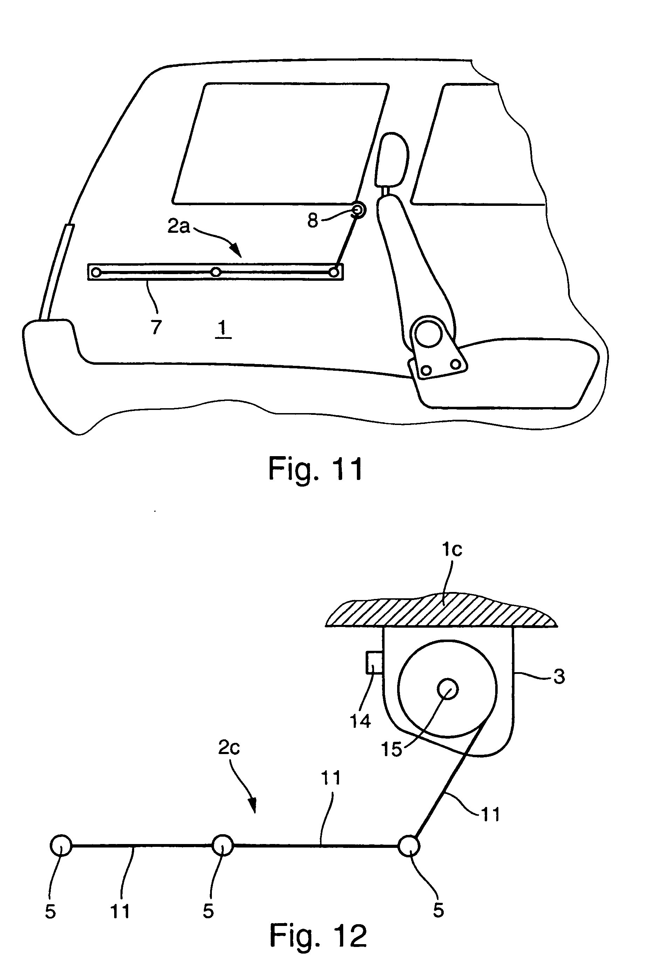

Bei der Ausführung nach Fig. 11 ist kein Kassettengehäuse für ein zusätzliches Trennrollo vorgesehen. Die Laderaumabdeckvorrichtung 2a, d.h. das Flächengebilde zusammen mit den entsprechenden Querstreben, kann bei Bedarf aus dem Fahrzeug vollständig herausgenommen werden oder in anderer Konfiguration innerhalb des Laderaumes fixiert werden.

Beim Ausführungsbeispiel nach Fig. 12 ist die Laderaumabdeckvorrichtung 2c in einem Kofferraum des Kraftfahrzeugs untergebracht. Das Flächengebilde einschließlich Querstreben 5 ist auf eine Rollowelle 15 aufwickelbar, die in einem Kassettengehäuse 3 drehbar gelagert ist. Das Kassettengehäuse 3 ist an einer Unterseite eines Karosserierohbauteiles, insbesondere einer Hutablage 1c befestigt, die eine obere Begrenzung des Kofferraumes in seinem vorderen Bereich bildet. Die Rollowelle 15 ist durch eine Wickelfeder (nicht dargestellt) in Rückholrichtung des Flächengebildes belastet. Um zu verhindern, dass durch die Rückholkraft der Wickelfeder auf die Flächengebildeabschnitte 11 und auch auf die entsprechend fahrzeugfest eingehängten Querstreben 5 eine permanente Zugbelastung ausgeübt wird, ist der Rollowelle 15 eine Sperrvorrichtung 14 zugeordnet, die in Fig. 12 lediglich durch den manuellen Entriegelungsknopf 14 angedeutet ist. Die Sperrvorrichtung wirkt nach Art eines Freilaufes, der ein entsprechendes Sperrklinkenrad aufweisen kann. Sie ist derart gestaltet, dass das Flächengebilde und die Querstreben 5 ausgezogen werden können, gleichzeitig jedoch ein automatisches Rückholen, d.h. Aufwickeln gesperrt ist. Erst durch Drücken des Entriegelungsknopfes 14 wird die Sperrwirkung der Sperreinrichtung aufgehoben und die Wickelfeder wieder in Kraft gesetzt, so dass durch Drücken des Entriegelungsknopfes 14 ein automatisches Aufwickeln der Flächengebildeabschnitte 11 und der Querstreben 5 im Inneren des Kassettengehäuses 3 auf die Rollowelle 15 erfolgen kann.

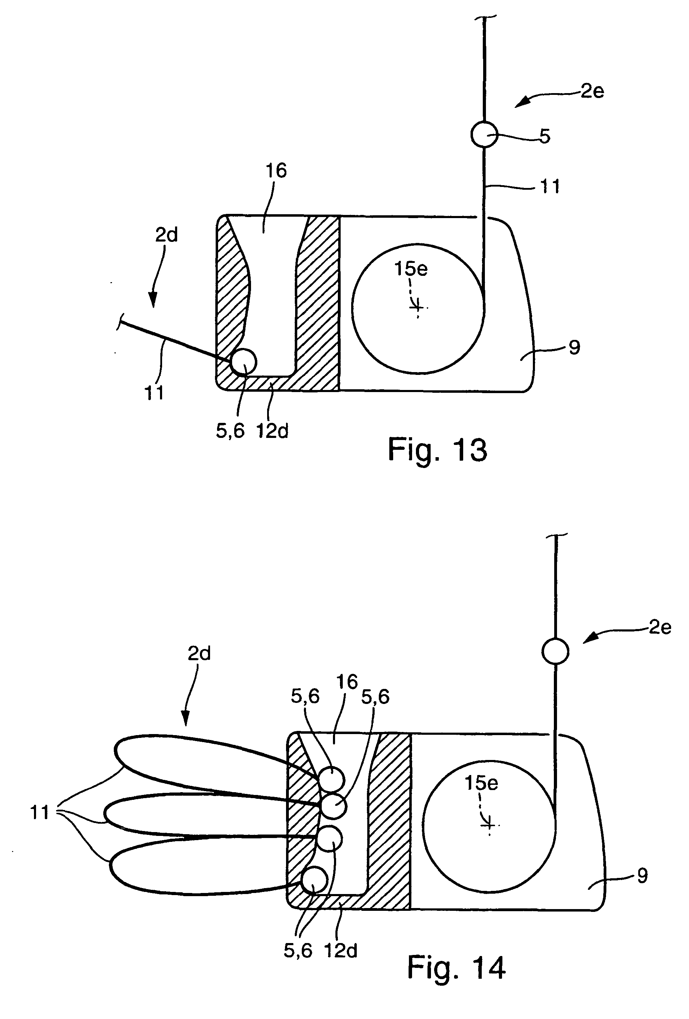

Beim Ausführungsbeispiel nach den Fig. 13 und 14 weist die Aufnahmeeinrichtung 12d seitliche Wangen auf, in denen jeweils eine nach oben offene Aufnahmetasche 16 vorgesehen ist. Zudem sind die Aufnahmetaschen 16 nach innen hin mit Rückhalteschenkeln entsprechend der Darstellung der Befestigungs- und/oder Führungsbereiche 7, 8 nach den Fig. 15 und 16 versehen, so dass die entsprechenden Halteköpfe der Haltelemente 6 der Querstreben 5 von oben her in die Aufnahmetaschen 16 eingesteckt werden können, jedoch nicht nach innen aus den Aufnahmetaschen 16 herausgleiten können. Die Tiefe der Aufnahmetasche 16 im Bereich jeder Seitenwange ist so groß gewählt, dass alle Querstreben, d.h. Halteköpfe des Flächengebildes aufeinandergestapelt in diese aufgenommen werden können. Dies ist in Fig. 14 dargestellt. Die flexiblen Flächengebildeabschnitte 11 falten sich dadurch zwangsläufig gemäß der Darstellung nach Fig. 14.

## Patentansprüche

1. Laderaumabdeckvorrichtung für ein Kraftfahrzeug mit einem flexiblen Flächengebilde, das mit mehreren, sich wenigstens über die Breite des Flächengebildes erstreckenden und parallel sowie in Abstand zueinander angeordneten Querstreben versehen ist, und das in einer komprimierten Stauposition sowie in wenigstens einer zumindest teilweise ausgezogenen Funktionsposition fahrzeugfest sicherbar ist, wobei fahrzeugfest jeweils paarweise mehrere Befestigungs- und/oder Führungsbereiche (7, 8, 8a) in unterschiedlichen Positionen vorgesehen sind, und dass wenigstens ein Teil der Querstreben (5) an den gegenüberliegenden Seitenenden mit zu dem Befestigungs- und/oder Führungsbereichen (7, 8, 8a) korrespondierenden Halteelementen (6) versehen ist, die lösbar mit den Befestigungs- und/oder Führungsbereichen (7, 8, 8a) verbindbar sind, **dadurch gekennzeichnet, dass** die Befestigungs- und/oder Führungsbereiche (7, 8, 8a) im Ausziehbereich des Flächengebildes angeordnet sind.

2. Laderaumabdeckvorrichtung nach Anspruch 1, **dadurch gekennzeichnet, dass** die Befestigungs- und/oder Führungsbereiche (7, 8, 8a) in unterschiedlichen räumlichen Ebenen angeordnet sind.

3. Laderaumabdeckvorrichtung nach Anspruch 1 oder 2, **dadurch gekennzeichnet, dass** die Befestigungs- und/oder Führungsbereiche (7, 8, 8a) als wenigstens in Längsrichtung der Querstreben (5) formschlüssige Steckaufnahmen und die Halteelemente (6) als derart abgestimmte Steckelemente gestaltet sind, dass die jeweilige Querstrebe (5) auf Höhe des entsprechenden Befestigungs- und/oder Führungsbereiches (7, 8, 8a) sicherbar ist.

4. Laderaumabdeckvorrichtung nach Anspruch 1, **dadurch gekennzeichnet, dass** das flexible Flächengebilde einschließlich der Querstreben (5) zumindest abschnittsweise auf eine fahrzeugfest positionierbare Rollowelle (15) aufwickelbar ist.

5. Laderaumabdeckvorrichtung nach Anspruch 4, **dadurch gekennzeichnet, dass** die Rollowelle (15) in einem fahrzeugfest positionierbaren Kassettengehäuse (3) gelagert ist.

6. Laderaumabdeckvorrichtung nach Anspruch 1, **dadurch gekennzeichnet, dass** die Flexibilität des Flächengebilde wenigstens zwischen zwei Querstreben (5) derart hoch ist, dass das Flächengebilde (11) taschen- oder schlaufenförmig bei einem Zusammenschieben der Querstreben (5) zusammenfaltbar ist.

7. Laderaumabdeckvorrichtung nach Anspruch 1, **dadurch gekennzeichnet, dass** die unterschiedlichen Paare von Befestigungs- und/oder Führungsbereichen (7, 8, 8a) in Abständen zueinander angeordnet sind, die zumindest im wesentlichen einem ganzzahligen Vielfachen der Teilung der Querstreben (5) des Flächengebildes entsprechen.

8. Laderaumabdeckvorrichtung nach Anspruch 1, **dadurch gekennzeichnet, dass** die Befestigungs- und/oder Führungsbereiche (7, 8, 8a) unterhalb einer Fahrzeugbordkante angeordnet sind.

9. Laderaumabdeckvorrichtung nach Anspruch 4 oder 5, **dadurch gekennzeichnet, dass** der Rollowelle (15) eine Aufnahmeeinrichtung (10, 12, 12d) zugeordnet ist, die alternativ zu einem Aufwickeln des Flächengebildes ein aneinanderliegendes Aufreihen der Querstreben (5) unter faltenförmiger Ablage der dazwischenliegenden Flächengebildeabschnitte (11) gewährleistet.

10. Laderaumabdeckvorrichtung nach Anspruch 1, **dadurch gekennzeichnet, dass** die Halteelemente (6) durch koaxial zur Längsachse jeder Querstrebe (5) verschiebbare Halteköpfe gebildet sind, die axial nach innen oder nach außen federbelastet sind.

11. Laderaumabdeckvorrichtung nach Anspruch 4 oder 5, **dadurch gekennzeichnet, dass** die Rollowelle (15) in Aufwickelrichtung durch eine Wickelfederanordnung federbelastet ist, und dass eine lösbare Sperreinrichtung (14) vorgesehen ist, die die Wickelfederanordnung außer Kraft setzt.

12. Laderaumabdeckvorrichtung nach Anspruch 11, **dadurch gekennzeichnet, dass** die Sperreinrichtung mittels einer manuell bedienbaren Betätigungstaste (14) in die Freigabeposition überführbar ist.

## Claims

1. Load compartment covering device for a motor vehicle, having a flexible planar structure which is provided with a plurality of transverse struts extending at least over the width of the planar structure and arranged parallel to as well as at a distance from one another, and which can be secured fixedly to the vehicle in a compressed stored position and also in at least one at least partially drawn-out operating position, wherein there are provided, fixed to the vehicle, in each case in pairs, a plurality of fastening and/or guide regions (7, 8, 8a) in different positions, and wherein at least some of the transverse struts (5) are provided at their opposing ends with holding elements (6) corresponding to the fastening and/or guide regions (7, 8, 8a), which holding elements (6) can be releasably connected to the fastening and/or guide regions (7, 8, 8a), **characterised in that** the fastening and/or guide regions (7, 8, 8a) are arranged in the drawn-out region of the planar structure.

2. Load compartment covering device according to claim 1, **characterised in that** the fastening and/or guide regions (7, 8, 8a) are arranged in different spatial planes.

3. Load compartment covering device according to claim 1 or 2, **characterised in that** the fastening and/or guide regions (7, 8, 8a) are in the form of positive-locking plug-type receivers at least in the longitudinal direction of the transverse struts (5), and the holding elements (6) are in the form of plug-type elements matched thereto, and **in that** the respective transverse strut (5) can be secured at the level of the corresponding fastening and/or guide region (7, 8, 8a).

4. Load compartment covering device according to claim 1, **characterised in that** at least a portion of the flexible planar structure, including the transverse struts (5), can be wound onto a roller shaft (15) which can be positioned fixed to the vehicle.

5. Load compartment covering device according to claim 4, **characterised in that** the roller shaft (15) is mounted in a cassette housing (3) which can be positioned fixed to the vehicle.

6. Load compartment covering device according to claim 1, **characterised in that** the flexibility of the planar structure at least between two transverse struts (5) is so great that the planar structure (11) can be folded up in the form of a pocket or loop when the transverse struts (5) are pushed together.

7. Load compartment covering device according to claim 1, **characterised in that** the different pairs of fastening and/or guide regions (7, 8, 8a) are arranged at intervals from one another that correspond at least substantially to an integral multiple of the spacing of the transverse struts (5) of the planar structure.

8. Load compartment covering device according to claim 1, **characterised in that** the fastening and/or guide regions (7, 8, 8a) are arranged beneath a waistline of the vehicle.

9. Load compartment covering device according to claim 4 or 5, **characterised in that** a receiving device (10, 12, 12d) is associated with the roller shaft (15), which receiving device (10, 12, 12d), as an alternative to winding of the planar structure, allows the transverse struts (5) to be lined up adjacent to one another with the intermediate planar structure sections (11) arranged in folds.

10. Load compartment covering device according to claim 1, **characterised in that** the holding elements (6) are formed by holding heads which are displaceable coaxially relative to the longitudinal axis of each transverse strut (5) and which are axially spring-loaded inwards or outwards.

11. Load compartment covering device according to claim 4 or 5, **characterised in that** the roller shaft (15) is spring-loaded in the winding direction by a volute spring arrangement, and **in that** there is provided a releasable locking device (14) which makes the roller spring arrangement inoperative.

12. Load compartment covering device according to claim 11, **characterised in that** the locking device can be brought into the release position by means of a manually operable actuating button (14).

## Revendications

1. Dispositif de couverture du compartiment à bagages pour un véhicule automobile, comportant une structure surfacique flexible qui est pourvue de plusieurs traverses s'étendant au moins sur la largeur de la structure surfacique et agencées parallèlement et à distance les unes des autres, et qui est susceptible d'être bloquée solidairement avec le véhicule dans une position de rangement comprimée ainsi que dans au moins une position fonctionnelle au moins partiellement étirée, dans lequel sont prévues par paires respectives plusieurs zones de fixation et/ou de guidage (7, 8, 8a) solidaires du véhicule dans différentes positions, au moins une partie des traverses (5) étant pourvues, aux extrémités latérales opposées, d'éléments de retenue (6) qui correspondent aux zones de fixation et/ou de guidage (7, 8, 8a) et qui sont reliés de façon détachable aux zones de fixation et/ou de guidage (7, 8, 8a), **caractérisé en ce que** les zones de fixation et/ou de guidage (7, 8, 8a) sont agencées dans la zone d'extraction de la structure surfacique.

2. Dispositif de couverture du compartiment à bagages selon la revendication 1, **caractérisé en ce que** les zones de fixation et/ou de guidage (7, 8, 8a) sont agencées dans différents plans dans l'espace.

3. Dispositif de couverture du compartiment à bagages selon la revendication 1 ou 2, **caractérisé en ce que** les zones de fixation et/ou de guidage (7, 8, 8a) sont réalisées sous forme de logements d'enfichage en coopération de formes au moins en direction longitudinale des traverses (5), et les éléments de retenue (6) sont réalisés sous forme d'éléments enfichables ajustés de telle sorte que la traverse respective (5) est susceptible d'être bloquée à la hauteur de la zone de fixation et/ou de guidage correspondante (7, 8, 8a).

4. Dispositif de couverture du compartiment à bagages selon la revendication 1, **caractérisé en ce que** la structure surfacique flexible, y compris les traverses (5), est susceptible d'être enroulée au moins par tronçons sur un arbre d'enroulement (15) positionnable solidairement dans le véhicule.

5. Dispositif de couverture du compartiment à bagages selon la revendication 4, **caractérisé en ce que** l'arbre d'enroulement (15) est monté dans un boîtier en cassette (3) positionnable solidairement dans le véhicule.

6. Dispositif de couverture du compartiment à bagages selon la revendication 1, **caractérisé en ce que** la flexibilité de la structure surfacique au moins entre deux traverses (5) est aussi élevée que la structure surfacique (11) est repliable en forme de poche ou de boucle lors de rétraction des traverses (5).

7. Dispositif de couverture du compartiment à bagages selon la revendication 1, **caractérisé en ce que** les différentes paires de zones de fixation et/ou de guidage (7, 8, 8a) sont agencées à des distances les unes des autres, qui correspondent au moins essentiellement à un multiple entier de la division des traverses (5) de la structure surfacique.

8. Dispositif de couverture du compartiment à bagages selon la revendication 1, **caractérisé en ce que** les zones de fixation et/ou de guidage (7, 8, 8a) sont agencées au-dessous d'une arête de bord du véhicule.

9. Dispositif de couverture du compartiment à bagages selon la revendication 4 ou 5, **caractérisé en ce qu'**à l'arbre d'enroulement (15) est associé un dispositif de réception (10, 12, 12d) qui assure, en variante à un enroulement de la structure surfacique, une mise en rangée adjacente des traverses (5) avec pose en forme de plis des tronçons de structure surfacique interposés (11).

10. Dispositif de couverture du compartiment à bagages selon la revendication 1, **caractérisé en ce que** les éléments de retenue (6) sont formés par des têtes de retenue mobiles coaxialement à l'axe longitudinal de chaque traverse (5), qui sont chargées par ressort axialement vers l'intérieur ou vers l'extérieur.

11. Dispositif de couverture du compartiment à bagages selon la revendication 4 ou 5, **caractérisé en ce que** l'arbre d'enroulement (15) est chargé élastiquement en direction d'enroulement par un agencement à ressort d'enroulement, et **en ce qu'**il est prévu un dispositif d'arrêt libérable (14) qui met hors de service l'agencement à ressort d'enroulement.

12. Dispositif de couverture du compartiment à bagages selon la revendication 11, **caractérisé en ce que** le dispositif d'arrêt est transférable à la position de libération au moyen d'une touche d'actionnement (14) à actionner manuellement.
